# EUROPÄISCHE PATENTANMELDUNG

(11) **EP 4 474 125 A1**
(43) Veröffentlichungstag der Anmeldung: **11.12.2024**
(21) Anmeldenummer: 23178351.5
(22) Anmeldetag: 09.06.2023
(51) Int. Cl.: B29B 17/02, B29B 17/00, B29K 25/00, B29K 23/00

(54) **VERFAHREN ZUR HERSTELLUNG EINES KUNSTSTOFFRECYCLATS**

(71) Anmelder: Kunststoff Recycling Grünstadt GmbH, 65719 Hofheim am Taunus (DE)
(72) Erfinder: MEINHARDT, Frank-Steffen, 65719 Hofheim am Taunus (DE); KRAFFCZYK, Torben, 65719 Hofheim am Taunus (DE)
(74) Vertreter: Pelster Behrends Patentanwälte PartG mbB

(57) **Zusammenfassung**

Die Erfindung betrifft ein Verfahren zur Herstellung eines Kunststoffrecyclats, umfassend die Verfahrensschritte: a) Herstellen oder Bereitstellen einer Ausgangszusammensetzung umfassend einen Zielkunststoff in einem Massenanteil von 90 % oder mehr, bezogen auf die Masse der Ausgangszusammensetzung, wobei der Zielkunststoff ausgewählt ist aus der Gruppe bestehend aus Polyethylen, Polypropylen und Polystyrol, b) Zerkleinern der Ausgangszusammensetzung in einem Zerkleinerungsaggregat zum Erhalt eines partikulären Kunststoffmaterials, c) Reinigen des partikulären Kunststoffmaterials zum Erhalt eines gereinigten Kunststoffmaterials, wobei das Reinigen das Waschen in einem Intensivwäscher umfasst, wobei das Waschen im Intensivwäscher bei einer Temperatur von 60 °C oder mehr erfolgt, wobei das Reinigen nach dem Intensivwäscher das Spülen mit Osmosewasser umfasst, wobei das Osmosewasser hergestellt wird durch Aufreinigung in einer Umkehrosmoseanlage, und d) Extrudieren und Granulieren des gereinigten Kunststoffmaterials zum Erhalt eines Kunststoffrecyclats, umfassend den Zielkunststoff.

## Beschreibung

Die Erfindung betrifft ein Verfahren zur Herstellung eines Kunststoffrecyclats und eine Aufreinigungsanlage für den Einsatz in dem entsprechenden Verfahren. Offenbart wird zudem ein Kunststoffrecyclat, welches mit dem Verfahren hergestellt wurde.

Weltweit werden jährlich Millionen Tonnen an Kunststoffen für die Herstellung von Verpackungen eingesetzt, insbesondere für Kunststoffverpackungen von kurzlebigen Produkten wie beispielsweise Nahrungsmittel oder Kosmetikprodukte. Ein großer Teil dieser Verpackungen wird früher oder später zu Abfall.

Die heutzutage für Verpackungen genutzten Kunststoffmaterialien sind zumeist weitgehend, typischerweise zu 90 % oder mehr aus Neuware hergestellt. Stand heute wird in vielen westlichen Industrienationen nur ein sehr kleiner Teil des benötigten Materials durch sogenannte Recyclate beigesteuert. Diese Recyclate werden dabei überwiegend aus Produktionsabfällen erhalten, welche gegenüber Abfall, welcher von Produkten anfällt, die für ihren beabsichtigten Einsatzzweck bereits eingesetzt wurden, den Vorteil haben, dass sie regelmäßig sauberer und sortenreiner vorliegen. Die im Rahmen der Sammlung und Sortierung von Kunststoffverpackungen aus privaten Haushalten anfallenden Kunststoffe werden hingegen weitgehend in Anwendungen eingesetzt, welche an die (Sorten-)Reinheit der Kunststoffe einen niedrigeren Anspruch stellen, beispielsweise die Bauwirtschaft oder die Landwirtschaft.

Angesichts des großen Anteils an dem potentiell wiederzuverwertenden Kunststoff, den Kunststoffprodukte haben, welche zuvor für ihren beabsichtigten Einsatzzweck eingesetzt wurden (vom Fachmann auch als PCR für "postconsumer-recycelt" bezeichnet) aufweisen, besteht ein fortgesetztes Interesse daran, solche PCR-Kunststoffe durch geeignete Recyclingverfahren auch für höherwertige Anwendungen nutzbar zu machen. Somit besteht ein Bedürfnis danach, ein Verfahren zur Herstellung von Kunststoffrecyclat anzugeben, mit welchem aus PCR-Kunststoffabfällen hochwertige Kunststoffmaterialien erhalten werden können, welche besonders sauber und sortenrein sind und somit beispielsweise für den Einsatz in der Herstellung von neuwertigen Verpackungsmaterialien besonders geeignet sind.

Aufgrund der hohen Bedeutung, welche dem Kunststoff Polyethylenterephthalat (PET) im Bereich der Kunststoffverpackungen zukommt, sind im Stand der Technik leistungsfähige Recyclingverfahren für PET entwickelt worden. Mengenmäßig sind neben PET aber auch Polyethylen (PE), insbesondere das "high density" Polyethylen (HDPE), Polypropylen (PP) und Polystyrol (PS) wichtige Kunststoffmaterialien, für die die im Stand der Technik bekannten, zumeist auf PET ausgelegten, Aufreinigungsverfahren und Anlagen in vielen Fällen noch als verbesserungswürdig angesehen werden.

Die primäre Aufgabe der vorliegenden Erfindung war es, die vorstehend beschriebenen Nachteile des Standes der Technik auszuräumen oder zumindest abzuschwächen.

Insbesondere war es die Aufgabe der vorliegenden Erfindung, ein Verfahren zur Herstellung eines Kunststoffrecyclats anzugeben, mit denen Polyethylen, insbesondere HDPE, Polypropylen und Polystyrol besonders sauber und sortenrein erhalten werden können.

Hierbei war es eine wichtige Aufgabe der vorliegenden Erfindung, dass das anzugebende Verfahren vorteilhafterweise auch für die Verarbeitung von haushaltsnah gesammelten Kunststoffabfällen (PCR) geeignet sein sollte und dadurch eine Steigerung der Wiederverwertungsquote der genannten Kunststoffe bei der Herstellung neuer Kunststoffverpackungen ermöglichen sollte.

Es war eine weitere Aufgabe der vorliegenden Erfindung, dass das anzugebende Verfahren besonders zeit- und kosteneffizient betreibbar sein sollte, sodass die damit hergestellten reinen Kunststoffrecyclate durch einen vorteilhaften Materialpreis eine hohe Akzeptanz in der Kunststoff verarbeitenden Industrie aufweisen sollten.

Es war eine ergänzende Aufgabe der vorliegenden Erfindung, dass das anzugebende Verfahren wünschenswerterweise so ausgestaltet sein sollte, dass die hergestellten Kunststoffrecyclate im Wesentlichen geruchsneutral sein sollten, bzw. keine materialfremden Gerüche aufweisen sollten. Insoweit war es auch wünschenswert, dass es mit dem anzugebenden Verfahren möglich sein sollte, Kunststoffrecyclat bereitzustellen, welches hinsichtlich der Farb- und Transparenteigenschaften präzise gesteuert werden kann, wobei es insbesondere wünschenswert war, dass mit dem anzugebenden Verfahren auch im Wesentlichen farblose und transparente Kunststoffrecyclate herstellbar sein sollten, insbesondere auch aus farblich heterogenen PCR-Kunststoffabfällen als Ausgangsmaterial.

Es war eine ergänzende Aufgabe der vorliegenden Erfindung, dass das anzugebende Verfahren möglichst umweltschonend sein sollte und dabei die im Verfahren eingesetzten Arbeitskräfte möglichst wenig gesundheitlichen Risiken ausgesetzt sein sollten.

Darüber hinaus war es eine Aufgabe der vorliegenden Erfindung, eine Aufreinigungsanlage bereitzustellen, die für den Einsatz in dem anzugebenden Verfahren besonders geeignet ist.

Es war eine sekundäre Aufgabe der vorliegenden Erfindung, ein vorteilhaftes Kunststoffrecyclat bereitzustellen, welches mit dem anzugebenden Verfahren herstellbar ist.

Die Erfinder der vorliegenden Erfindung haben nunmehr gefunden, dass sich die vorstehenden Aufgaben lösen lassen, wenn in einem Verfahren zur Herstellung einer Kunststoffrecyclats insbesondere eine Heißwäsche in einem Intensivwäscher mit dem Einsatz von Osmosewasser zur Nachspülung der erhaltenen Materialien kombiniert wird, wie es in den Ansprüchen definiert ist.

Die vorstehend genannten Aufgaben werden entsprechend durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Kunststoffrecyclate und Aufreinigungsanlage, ergeben sich aus den Merkmalen bevorzugter Verfahren.

Die Erfindung betrifft insbesondere ein Verfahren zur Herstellung einer Kunststoffrecyclats, umfassend die Verfahrensschritte:
a) Herstellen oder Bereitstellen einer Ausgangszusammensetzung umfassend einen Zielkunststoff in einem Massenanteil von 90 % oder mehr, bezogen auf die Masse der Ausgangszusammensetzung, wobei der Zielkunststoff ausgewählt ist aus der Gruppe bestehend aus Polyethylen, Polypropylen und Polystyrol,
b) Zerkleinern der Ausgangszusammensetzung in einem Zerkleinerungsaggregat zum Erhalt eines partikulären Kunststoffmaterials,
c) Reinigen des partikulären Kunststoffmaterials zum Erhalt eines gereinigten Kunststoffmaterials,
   wobei das Reinigen das Waschen in einem Intensivwäscher umfasst, wobei das Waschen im Intensivwäscher bei einer Temperatur von 60 °C oder mehr erfolgt,
   wobei das Reinigen nach dem Intensivwäscher das Spülen mit Osmosewasser umfasst, wobei das Osmosewasser hergestellt wird durch Aufreinigung in einer Umkehrosmoseanlage, und
d) Extrudieren und Granulieren des gereinigten Kunststoffmaterials zum Erhalt eines Kunststoffrecyclats, umfassend den Zielkunststoff.

Das erfindungsgemäße Verfahren dient der Herstellung eines Kunststoffrecyclats. In Verfahrensschritt a) wird dafür zunächst eine Ausgangszusammensetzung bereitgestellt, welche einen Zielkunststoff umfasst. Der Zielkunststoff bezeichnet im Rahmen des erfindungsgemäßen Verfahrens eben jenen Typ Kunststoff, welcher im erfindungsgemäßen Verfahren als Kunststoffrecyclat möglichst (sorten-)rein erhalten werden soll. Der Fachmann versteht, dass es aus ökonomischen und ökonomischen Gesichtspunkten zweckmäßig ist, wenn ein Zielkunststoff A erhalten werden soll, in der Ausgangszusammensetzung einen hinreichenden Massenanteil dieses Zielkunststoffes A vorzusehen, da sich ein hoher Massenanteil in der Ausgangszusammensetzung unmittelbar auf die Effizienz des Verfahrens auswirkt. Bevorzugt ist entsprechend ein erfindungsgemäßes Verfahren, wobei die Ausgangszusammensetzung den Zielkunststoff in einem Massenanteil von 92 % oder mehr, bevorzugt 94 % oder mehr, besonders bevorzugt 96 % oder mehr, umfasst.

Der Fachmann versteht, dass aus dem Umstand, dass es sich um ein Verfahren zur Herstellung eines Kunststoffrecyclats handelt, folgt, dass der Zielkunststoff ein Recyclingmaterial ist. Mit anderen Worten handelt es sich um ein erfindungsgemäßes Verfahren, wobei die Ausgangszusammensetzung den Zielkunststoff in der Form von recyceltem Kunststoffmaterial umfasst.

Zumindest theoretisch ist es denkbar, mit dem erfindungsgemäßen Verfahren solche Kunststoffabfälle zu verarbeiten, welche im industriellen Kontext als sogenannte PIR ("post-industrial-recycyclat") erhalten wurden, wobei sich ebenfalls ausgezeichnete Ergebnisse erzielen lassen. Im Lichte der Leistungsfähigkeit des erfindungsgemäßen Verfahrens ist es jedoch für im Wesentlichen alle Ausführungsformen bevorzugt, wenn das erfindungsgemäße Verfahren verwendet wird, um aus anspruchsvolleren PCR-Abfällen saubere und sortenreine Kunststoffrecyclate zu gewinnen. Bevorzugt ist entsprechend ein erfindungsgemäßes Verfahren, wobei die Ausgangszusammensetzung den Zielkunststoff in der Form von recyceltem Kunststoffmaterial aus dem Endverbraucherbereich umfasst, insbesondere wiederverwertete Kunststoffverpackungen, und/oder wobei die Ausgangszusammensetzung den Zielkunststoff in der Form von recyceltem Kunststoffmaterial aus der haushaltsnahen Erfassung, bzw. Sammlung bzw. Entsorgung umfasst. Entsprechendes Kunststoffmaterial wird auch über den Zusatz "Post-Consumer-Recycling" im Sinne der DIN EN ISO 14021:2016-07 charakterisiert. Mit anderen Worten handelt es sich bevorzugt um ein erfindungsgemäßes Verfahren, wobei die Ausgangszusammensetzung den Zielkunststoff in der Form von recyceltem Kunststoffmaterial aus dem Post-Consumer-Recycling umfasst.

Bevorzugt ist zusammengenommen ein erfindungsgemäßes Verfahren, wobei die Ausgangszusammensetzung bezogen auf die Masse der Ausgangszusammensetzung zu einem Massenanteil von 95 % oder mehr, bevorzugt 98 % oder mehr, besonders bevorzugt 99 % oder mehr, ganz besonders bevorzugt im Wesentlichen vollständig aus recyceltem Kunststoffmaterial, insbesondere recyceltem Kunststoffmaterial aus dem Endverbraucherbereich bzw. aus der haushaltsnahen Sammlung bzw. Entsorgung, besteht.

Die in Verfahrensschritt a) eingesetzte Ausgangszusammensetzung erfüllt insbesondere durch den definierten Massenanteil des Zielkunststoffes eine gewisse Mindestanforderung für die Weiterverarbeitung im erfindungsgemäßen Verfahren. In der Praxis wird der Fachmann die Ausgangszusammensetzung hinsichtlich der Darreichungsform an die Abmessungen der von ihm verwendeten Aufreinigungsanlage sowie der nachgeschalteten Aufreinigungsschritte anpassen. Beispielsweise kann Ballenware aus Leichtverpackungen, wie sie beispielsweise aus der haushaltsnahen Sammlung erhalten werden, in Abhängigkeit von der Region noch nicht die vom Fachmann für die Weiterverarbeitung gewünschten Qualitäten erfüllen. Hierzu gehören neben einem zu niedrigen Massenanteil des Zielkunststoffes potentiell unter anderem auch eine möglicherweise unpassende Teilchengröße, eine zu hohe Konzentration an metallischen Verunreinigungen und insbesondere eine unzureichende Farbreinheit, wenn in der Ballenware beispielsweise zu viele farbige Kunststoffteile vorhanden sind, um die angestrebte Färbung im Kunststoffrecyclat zu erreichen. Die Erfinder schlagen insoweit ein effizientes Vorverarbeitungsverfahren vor, um beispielsweise aus Ballenware oder anderen haushaltsnah gesammelten Kunststoffabfällen in effizienter Weise eine Ausgangszusammensetzung zu erhalten, welche für den Einsatz im erfindungsgemäßen Verfahren besonders geeignet ist. Bevorzugt ist hierfür ein erfindungsgemäßes Verfahren, wobei die Ausgangszusammensetzung in Verfahrensschritt a) aus einer Vorläuferzusammensetzung mit einem Verfahren hergestellt wird, umfassend einen oder mehrere, bevorzugt mehrere, besonders bevorzugt sämtliche der Schritte:
a1) Vorzerkleinern der Vorläuferzusammensetzung zum Erhalt einer zerkleinerten Vorläuferzusammensetzung, wobei bevorzugt eine Größenfraktion der zerkleinerten Vorläuferzusammensetzung vereinzelt wird, bevorzugt mittels einer Siebanlage, wobei die Größe der Kunststoffpartikel in der Größenfraktion der zerkleinerten Vorläuferzusammensetzung bevorzugt im Bereich von 10 bis 380 mm, besonders bevorzugt im Bereich von 20 bis 350 mm, besonders bevorzugt im Bereich von 30 bis 320 mm, liegt, und/oder
a2) Abscheiden von magnetischen Verunreinigungen aus der Vorläuferzusammensetzung bzw. der zerkleinerten Vorläuferzusammensetzung bzw. der Größenfraktion der zerkleinerten Vorläuferzusammensetzung, wobei das Abscheiden bevorzugt mittels Magnetabscheidern erfolgt, insbesondere Überbandmagneten und/oder Trommelmagneten, und/oder
a3) Entfernen von nicht-magnetischen metallischen Verunreinigungen aus der Vorläuferzusammensetzung bzw. der zerkleinerten Vorläuferzusammensetzung bzw. der Größenfraktion der zerkleinerten Vorläuferzusammensetzung, mit einem Nichteisen-Metallabscheider, und/oder
a4) Sortieren von Kunststoffen aus der Vorläuferzusammensetzung bzw. der zerkleinerten Vorläuferzusammensetzung bzw. der Größenfraktion der zerkleinerten Vorläuferzusammensetzung mittels sensorgestützter Sortierung in einer Sortieranlage, wobei die sensorgestützte Sortierung bevorzugt unter Einsatz optischer Sensoren erfolgt, wobei die optischen Sensoren besonders bevorzugt NIR-Sensoren sind, wobei das Sortieren insbesondere zur Entfernung von Kunststoffen dient, die keine Zielkunststoffe sind, wobei das Sortieren optional zusätzlich auch in Bezug auf die Farbe der Kunststoffe erfolgt.

Das erfindungsgemäße Verfahren eignet sich ausgezeichnet, um Polyethylen-, Polypropylen- oder Polystyrol-Kunststoffrecyclate herzustellen. Nach Einschätzung der Erfinder ist das Verfahren aber insbesondere für die Aufbereitung von Polyethylen, insbesondere HDPE, besonders leistungsfähig, sodass die entsprechende Ausgestaltung des Verfahrens ganz besonders bevorzugt ist. Bevorzugt ist entsprechend ein erfindungsgemäßes Verfahren, wobei der Zielkunststoff ausgewählt ist aus der Gruppe bestehend aus Polyethylen, bevorzugt Polyethylen mit einer Dichte bei 20 °C von 0,94 g/cm³ oder mehr, besonders bevorzugt Polyethylen mit einer Dichte im Bereich von 0,94 bis 0,97 g/cm³.

In Verfahrensschritt b) des erfindungsgemäßen Verfahrens wird die Ausgangszusammensetzung zunächst in einem Zerkleinerungsaggregat zerkleinert, um ein partikuläres Kunststoffmaterial zu erhalten. Im Lichte der vorstehenden Ausführungen versteht der Fachmann, dass dieses Zerkleinern der Ausgangszusammensetzung ausgehend von einer bereits vorzerkleinerten Ausgangszusammensetzung erfolgen kann, um für die für das weitere Verfahren gewünschte Teilchengröße zu erhalten. Den Erfindern ist es insoweit gelungen, besonders geeignete Teilchengrößen zu identifizieren, mit denen sich in den nachgelagerten Verarbeitungsschritten, insbesondere in dem Intensivwäscher, ausgezeichnete Ergebnisse erzielen lassen. Bevorzugt ist ein erfindungsgemäßes Verfahren, wobei das partikuläre Kunststoffmaterial eine mittlere Teilchengröße D50 im Bereich von 1 bis 30 mm, bevorzugt im Bereich von 2 bis 25, besonders bevorzugt im Bereich von 3 bis 20, aufweist.

Nach Einschätzung der Erfinder ist es besonders vorteilhaft, den Zerkleinerungsschritt so durchzuführen, dass das partikuläre Kunststoffmaterial überwiegend, bevorzugt im Wesentlichen vollständig, die Form von Flakes, aufweist, welche sich insbesondere im anschließenden Intensivwäscher besonders gut verarbeiten lassen. Bevorzugt ist somit ein erfindungsgemäßes Verfahren, wobei das partikuläre Kunststoffmaterial den Zielkunststoff in der Form von Flakes umfasst.

Besonders gute Ergebnisse hinsichtlich der Qualität des resultierenden Kunststoffrecyclates wurden von den Erfindern dadurch erreicht, dass das Zerkleinern der Ausgangszusammensetzung unter Wasser erfolgt, beispielsweise mit einer Nassschneidmühle. Bevorzugt ist demgemäß ein erfindungsgemäßes Verfahren, wobei das Zerkleinern der Ausgangszusammensetzung unter Wasser erfolgt.

Ein nach Einschätzung der Erfinder besonders wichtiger Verfahrensschritt, ist der Verfahrensschritt c). In diesem Verfahrensschritt c) wird das partikuläre Kunststoffmaterial gereinigt. Diese Reinigung kann eine Vielzahl von einzelnen Reinigungsschritten umfassen, umfasst jedoch in jedem Fall das Waschen des partikulären Kunststoffmaterials in einem Intensivwäscher bei erhöhten Temperaturen sowie das Spülen mit Osmosewasser, wie es nachfolgend weiter offenbart wird.

Der Reinigung des partikulären Kunststoffmaterials im Intensivwäscher kommt nach Einschätzung der Erfinder eine besondere Bedeutung bei. Das besondere an der von dem Erfinder entwickelten Verfahrensführung ist hierbei, dass diese Wäsche im Intensivwäscher nicht im Wesentlichen bei Raumtemperatur erfolgt, sondern dass vielmehr ein Waschen bei einer erhöhten Temperatur erfolgt. Dies sorgt im Zusammenspiel mit der nachgelagerten Nachreinigung mit Osmosewasser, wie sie nachfolgend weiter beschrieben wird, für eine ausgezeichnete Reinigungswirkung der zuvor zerkleinerten Ausgangszusammensetzung.

Insoweit ist es den Erfindern gelungen, besonders geeignete Betriebsparameter für die Temperatur im Intensivwäscher zu identifizieren, mit denen sich insbesondere für Polyethylen, gerade HDPE, besonders vorteilhafte Ergebnisse erzielen lassen. Bevorzugt ist nämlich ein erfindungsgemäßes Verfahren, wobei das Waschen in dem Intensivwäscher bei einer Temperatur von 65 °C oder mehr, bevorzugt 70 °C oder mehr, besonders bevorzugt 75 °C oder mehr, insbesondere bevorzugt 80 °C oder mehr, erfolgt. Bevorzugt ist zusätzlich oder alternativ ein erfindungsgemäßes Verfahren, wobei das Waschen in dem Intensivwäscher bei einer Temperatur im Bereich von 60 bis 90 °C, bevorzugt im Bereich von 65 bis 85 °C, erfolgt.

Die für die Umsetzung der Heißwäsche benötigte Energie kann in vorteilhafter Weise beispielsweise durch eine Fotovoltaikanlage und/oder durch ein angeschlossenes Blockkreisheizkraft gewonnen werden.

Das erfindungsgemäße Verfahren setzt auf den Einsatz eines Intensivwäschers, wodurch ausgedrückt wird, dass eine spezifische, dezidierte Waschvorrichtung für die Heißwäsche eingesetzt wird, die dazu eingerichtet ist, das zu reinigende Material bei der angegeben Temperatur für eine vorgegebene mittlere Verweilzeit und unter Agitieren zu waschen, bevorzugt unter mechanischer Agitation. Der Intensivwäscher ist mit anderen Worten dafür eingerichtet, das Waschen des partikulären Kunststoffmaterials bei der angegeben Waschtemperatur zu ermöglichen.

Bevorzugt ist ein erfindungsgemäßes Verfahren, wobei das Waschen in dem Intensivwäscher mit einer mittleren Verweilzeit im Bereich von 0,5 bis 15 min, bevorzugt im Bereich von 1 bis 10 min, erfolgt, was sich für eine besonders vorteilhafte Reinigung als zielführende Verweilzeiten erwiesen hat. Der Intensivwäscher ist entsprechend besonders bevorzugt dafür eingerichtet, das Waschen des partikulären Kunststoffmaterials für einer mittleren Verweilzeit im Bereich von 0,5 bis 15 min, bevorzugt im Bereich von 1 bis 10 min.

Im Zuge der Entwicklung des erfindungsgemäßen Verfahrens hat sich der Einsatz eines besonders vorteilhaften Intensivwäschers im Heißwaschmodul als vorteilhaft herauskristallisiert. Die Erfinder haben erkannt, dass es besonders vorteilhaft ist, einen möglichst vertikal ausgerichteten Intensivwäscher einzusetzen, dessen Waschkammer deutlich steiler liegt als bei gewöhnlichen Waschstraßen. Bevorzugt ist entsprechend ein erfindungsgemäßes Verfahren, wobei der Intensivwäscher ein im Wesentlichen, bevorzugt ein vollständig, vertikaler Intensivwäscher ist, und/oder wobei der Intensivwäscher eine Waschkammer aufweist, wobei die Längsrichtung des Waschkammer des Intensivwäscher mit der Schwerkraftrichtung einen Winkel im Bereich von 80° bis 90°, bevorzugt im Bereich von 85° bis 90°, einschließt.

In dem von den Erfinder für das Verfahren als besonders vorteilhaft identifizierten, möglichst vertikalen Intensivwäscher erfolgt die Zugabe des partikulären Kunststoffmaterials, anders als bei vielen aus dem Stand der Technik bekannten Intensivwäschern, am bezogen auf die Schwerkraftrichtung oberen Einlass des Intensivwäschers, sodass das partikuläre Kunststoffmaterial mit der Schwerkraft durch den Intensivwäscher geführt wird. Bevorzugt ist somit ein erfindungsgemäßes Verfahren, wobei der Intensivwäscher eine Waschkammer aufweist, wobei die Waschkammer bezogen auf die Schwerkraftrichtung im oberen Bereich, bevorzugt im oberen Drittel, besonders bevorzugt im oberen Viertel, ganz besonders bevorzugt im oberen Fünftel, einen Einlass für das partikuläre Kunststoffmaterial und im unteren Bereich, bevorzugt im unteren Drittel, besonders bevorzugt im unteren Viertel, ganz besonders bevorzugt im unteren Fünftel, insbesondere am untersten Punkt der Waschkammer, einen Auslass für das partikuläre Kunststoffmaterial umfasst. Bevorzugt ist zusätzlich oder alternativ ein erfindungsgemäßes Verfahren, wobei das partikuläre Kunststoffmaterial bezogen auf die Schwerkraftrichtung im oberen Bereich in die Waschkammer des Intensivwäschers eingegeben und nach dem Waschen im Intensivwäscher im unteren Bereich aus der Waschkammer ausgelassen wird.

In Kombination mit der vertikalen Ausrichtung wird durch diese Ausgestaltung ein Heißwaschmodul erhalten, welches so ausgeführt ist, dass das partikuläre Kunststoffmaterial am oberen Teil des Intensivwäschers eingeführt wird und im Intensivwäscher eine Materialsäule bildet. Durch diese Materialsäule entsteht ein Druckgefälle im Behälter, dass über den Befüllungsgrad gesteuert werden kann und mit zunehmender Schüttdichte im unteren Teil des Behälters zunimmt. Das partikuläre Kunststoffmaterial wird im Intensivwäscher agitiert und langsam in Bewegung gehalten, bevorzugt mittels eines Rührarms, sodass die Oberfläche der Kunststoffteilchen mechanisch gegeneinander arbeiten. Diese sanfte Reibungswirkung eröffnet die Möglichkeit der materialschonenden, intensiven Reinigung und führt zu geringen Materialverlusten im Feinkornbereich.

Für die Heißwäsche im Intensivwäscher schlagen die Erfinder vor, dass bevorzugt eine Waschlösung eingesetzt werden kann, welche neben Wasser auch basische Verbindungen zur Einstellung des pH-Wertes und/oder Tensid-Verbindungen umfassen kann, wobei es besonders bevorzugt ist, neben dem Wasser sowohl Tensid-Verbindungen einzusetzen und den pH-Wert der Waschlösung auf einen pH-Wert im Bereich zwischen 7 und 8, bevorzugt im Bereich von 7 bis 7,5 einzustellen. Die Menge und Zusammensetzung der Waschlösung, insbesondere hinsichtlich des Anteils von basischen Verbindungen und/oder Tensid-Verbindungen wird bevorzugt bedarfs- und zeitgesteuert geregelt, sodass beispielsweise der Gehalt an basischen Verbindungen auf den pH-Wert des eingesetzten Wassers abgestimmt oder in Abhängigkeit des pH-Wertes des Abwassers geregelt werden kann. Bevorzugt ist im Lichte der vorstehenden Ausführungen ein erfindungsgemäßes Verfahren, wobei das Waschen in dem Intensivwäscher mit einer Waschlösung erfolgt, wobei die Waschlösung bezogen auf die Masse der Waschlösung umfasst:
i.c) Wasser,
   sowie zusätzlich
ii.c1) ein oder mehrere basische Verbindungen, wobei die basischen Verbindungen bevorzugt ausgewählt sind aus der Gruppe bestehend aus Natriumhydroxid und Kaliumhydroxid, und/oder
ii.c2) ein oder mehrere Tensid-Verbindungen, wobei die Tensid-Verbindungen bevorzugt ausgewählt sind aus der Gruppe bestehend aus anionischen Tensiden.

Zwischen dem Zerkleinern der Ausgangszusammensetzung, beispielsweise in der Nassschneidemühle, und dem Intensivwäscher können als Teil des Reinigungsschrittes ein oder mehrere weitere Reinigungsschritte eingefügt werden. Insbesondere schlagen die Erfinder vor, dass durch den Einsatz eines Friktionswäschers nach dem Zerkleinerungsaggregat ein vorgereinigtes partikuläres Kunststoffmaterial erhalten werden kann, welches sich im anschließenden Intensivwäscher besonders effizient weiter aufreinigen lässt. Das Konzept eines Friktionswäschers ist dem Fachmann dabei aus dem Stand der Technik bekannt und Friktionswäscher sind von verschiedenen Anbietern kommerziell erhältlich. Entsprechende Friktionswäscher dienen häufig dem Reinigen von Mahlgutfraktionen und fördern das Mahlgut in einer schrägen Waschkammer mit einer Schneckenwelle gegen die Schwerkraftrichtung, wobei insbesondere kleinere Verunreinigungen durch ein im Friktionswäscher eingesetztes Sieb zusammen mit dem Waschwasser entfernt werden. Bevorzugt ist somit ein erfindungsgemäßes Verfahren, wobei das Reinigen vor dem Intensivwäscher ein Reinigen in einem Friktionswäscher umfasst.

Eine weitere Besonderheit des erfindungsgemäßen Verfahrens ist darin zu sehen, dass in Verfahrensschritt c) eine Nachwäsche nicht mit regulärem Frischwasser erfolgt, sondern die aus dem Intensivwäscher erhaltenen Materialien, gegebenenfalls nach Durchlaufen weiterer Zwischenwäschen oder Dichtetrennungen, mit Osmosewasser gespült werden. Bevorzugt ist dabei ein erfindungsgemäßes Verfahren, wobei das Spülen mit Osmosewasser unmittelbar nach dem Waschen in dem Intensivwäscher oder unmittelbar nach einer dem Intensivwäscher nachgelagerten Dichtetrennung erfolgt, wobei im letzteren Fall das Spülen der Zielfraktion erfolgt.

Osmosewasser ist dem Fachmann grundsätzlich bekannt und bezeichnet ein sehr reines Wasser, welches mittels Umkehrosmose hergestellt werden kann. Hierbei handelt es sich um ein dem Fachmann bekanntes Verfahren, bei welchem durch die Applikation von Druck und den Einsatz einer semi-permeablen Membran der osmotische Druck überwunden werden kann, um dadurch aufgereinigtes Wasser zu erhalten, welches hinsichtlich der im Wasser gelösten Verunreinigungen, insbesondere Salzen und Schwebstoffen einen verringerten Gehalt aufweist. Der Einsatz von Osmosewasser führt zu einer effizienteren Nachspülung der partikulären Kunststoffmaterialien und verhindert eine ungewünschten Querkontamination der gewaschenen Kunststoffmaterialien mit verunreinigten Prozesswasser. Ohne an diese Theorie gebunden sein zu wollen gehen die Erfinder davon aus, dass der niedrige Sättigungsgrad des Osmosewassers mit Salzen und anderen Verunreinigungen dahingehend eine vorteilhafte Wirkung entfaltet, entsprechende Substanzen von den zu waschenden partikulären Kunststoffmaterialien abzulösen. Die Erfinder haben erkannt, dass sich besonders gute Effekte in der Nachwäsche dann erzielen lassen, wenn eine leistungsstarke Umkehrosmoseanlage verwendet wird, die ein Osmosewasser mit einem niedrigen Gehalt an Fremdstoffen bereitstellen kann. In Übereinstimmung mit dem üblichen Vorgehen im Bereich der Technik wird dies insbesondere über die Leitfähigkeit des erhaltenen Osmosewassers sowie dessen pH-Wert angegeben. Bevorzugt ist ein erfindungsgemäßes Verfahren, wobei das Osmosewasser eine elektrische Leitfähigkeit bei 25 °C von 5 µS/cm oder weniger, bevorzugt von 4 µS/cm oder weniger, besonders bevorzugt von 3 µS/cm oder weniger, ganz besonders bevorzugt von 2 µS/cm oder weniger, insbesondere bevorzugt von 1 µS/cm oder weniger, aufweist. Bevorzugt ist zusätzlich oder alternativ ein erfindungsgemäßes Verfahren, wobei das Osmosewasser einen pH-Wert im Bereich von 4 bis 6, bevorzugt im Bereich von 4,5 bis 5,5 aufweist. Bevorzugt ist zusätzlich oder alternativ ein erfindungsgemäßes Verfahren, wobei das Osmosewasser einen dH-Wert (deutsche Härte) von 3 °dH oder weniger, bevorzugt2,5°dH oderweniger, besonders bevorzugt 2 °dH oder weniger aufweist.

Auch wenn es zumindest theoretisch denkbar wäre, das Osmosewasser für den Einsatz im erfindungsgemäßen Verfahren lediglich bereitzustellen, beispielsweise durch den Zukauf von einem Zulieferer, ist es mit Blick auf eine möglichst ökonomische und ökologische Verfahrensführung bevorzugt, das Osmosewasser im Rahmen des erfindungsgemäßen Verfahrens mittels einer entsprechenden Umkehrosmoseanlage herzustellen. Bevorzugt ist entsprechend ein erfindungsgemäßes Verfahren, wobei das Osmosewasser unmittelbar vor und/oder während Verfahrensschritt c) hergestellt wird.

Die Erfinder schlagen vor, dass, insbesondere wenn besonders hohe Reinheitsgrade benötigt werden, auch mehrere Spülschritte mit Osmosewasser vorgesehen werden können. Bevorzugt ist in diesem Fall ein erfindungsgemäßes Verfahren, wobei das Reinigen in Verfahrensschritt c) einen oder mehrere, bevorzugt zwei oder mehr, weitere Wasch- und Spülschritte mit Wasser, bevorzugt mit Osmosewasser, umfasst.

Da bedingt durch die erfindungsgemäß vorzunehmende Spülung mit Osmosewasser entsprechendes reines Osmosewasser verfügbar ist, ist es als weitere Ausgestaltung möglich, entsprechendes reines Osmosewasser bereits im Intensivwäscher oder sogar in einer etwaigen Nassschneidemühle einzusetzen. Nach Einschätzung der Erfinder können sich hierdurch potentiell weitere Vorteile bei der erzielbaren Reinheit des partikulären Kunststoffmaterials erzielen lassen. Diese Reinheitsgewinne stehen jedoch in Konkurrenz zu den gesteigerten Kosten und Anforderungen an den Durchsatz der zur Erzeugung des Osmosewassers verwendeten Anlagen, sodass diese Ausgestaltung nach Einschätzung der Erfinder vor allem für ausgewählte Hochleistungsanwendungen relevant werden wird. Bevorzugt ist ein erfindungsgemäßes Verfahren, wobei das Waschen in dem Intensivwäscher das Spülen mit Osmosewasser umfasst.

Zur Umsetzung einer besonders vorteilhaften Reinigungsleistung schlagen die Erfinder vor, in Verfahrensschritt c) zudem eine dichtebasierte Abtrennung von Verunreinigungen und anderen Kunststoffen vorzunehmen. Diese Trennstufe zur Trennung von schwimm- bzw. sinkfähigen Kunststoffen erfüllt dabei mehrere vorteilhafte Funktionen. Einerseits wird dadurch eine zusätzliche Trennung von diversen Kunststoffen nach der Sorte vollzogen, während andererseits eine zusätzliche Pufferung der von dem partikulären Kunststoffmaterialien abgewaschenen Reinigungsmitteln bzw. basischen Verbindungen erfolgt. In vorteilhafter Weise können die partikulären Kunststoffmaterialien mittels einer Entwässerungsschecke aus dieser Trennstufe herausgefördert werden, wodurch in vorteilhafter Weise eine geringe Verschleppung von basischen Verbindungen bzw. Reinigungsmittelbestandteilen erreicht werden kann. Hierdurch kann zudem eine deutliche Reduzierung des Frischwassereinsatzes nach de, Reinigungsprozess erreicht werden. Durch die aktive Steuerung der Trennstufe, beispielsweise zur Entnahme der Schwimm-Fraktion oder Sink-Fraktion, kann die eingesetzte Aufreinigungsanlage in vorteilhafter Weise flexibel auf die Verarbeitung von unterschiedlichen Kunststoffmaterialien abgestimmt werden. Bevorzugt ist ein erfindungsgemäßes Verfahren, wobei das Reinigen in Verfahrensschritt c) eine dichtebasierte Abtrennung von Verunreinigungen und Kunststoffen, bei denen es sich nicht um Zielkunststoff handelt, umfasst, bevorzugt eine dichtebasierte Abtrennung in Abhängigkeit von deren Schwimm- bzw. Sinkverhalten in Wasser, wobei Partikel aus Zielkunststoff bevorzugt mittels einer Entwässerungsschnecke aus einem Wasserbehälter entnommen werden. Besonders bevorzugt ist ein erfindungsgemäßes Verfahren, wobei die Entnahmestelle der Partikel aus Zielkunststoff aus der dichtebasierten Abtrennung in Abhängigkeit vom Zielkunststoff verändert wird, insbesondere zwischen der Schwimmfraktion und der Sinkfraktion.

Die aus Verfahrensschritt c) nach der Spülung mit Osmosewasser erhaltenen gereinigten Kunststoffmaterialien können in vorteilhafter Weise getrocknet und anschließend mittels geeigneten Trennverfahren, beispielsweise Windsichtung oder Siebung, von verbleibenden Verunreinigungen entfernt werden, welche im Intensivwäscher von den Kunststoffpartikeln abgetrennt wurden, jedoch in den anschließenden Spül- und Reinigungsschritten noch nicht aus dem gereinigten Kunststoffmaterial entfernt wurde. Bevorzugt ist entsprechend ein erfindungsgemäßes Verfahren, wobei das Reinigen in Verfahrensschritt c) die Trocknung des gereinigten Kunststoffmaterials umfasst, bevorzugt mittels mechanischer und/oder thermischer Trocknung, besonders bevorzugt mittels mechanischer und thermischer Trocknung. Bevorzugt ist zusätzlich oder alternativ ein erfindungsgemäßes Verfahren, wobei das Reinigen in Verfahrensschritt c) nach der Trocknung die Separierung von zu kleinen und/oder zu leichten Bestandteilen des gereinigten Kunststoffmaterials umfasst, bevorzugt mittels Windsichtung und/oder Siebung.

Die Erfinder schlagen vor, dass nach dem Trocknen des gereinigten Kunststoffmaterials zusätzlich eine weitere nachgeschaltete Sortierung erfolgen kann. Dies ist insbesondere dann wünschenswert, wenn beispielsweise eine besonders hohe Farbreinheit erreicht werden soll, beispielsweise zur Herstellung von transparenten bzw. farblosen Granulaten oder wenn im Ausgangsmaterial eine besonders starke Verunreinigung mit anderen Kunststoffen vorliegt. Für diesen nachgeschalteten Sortierschritt erachten die Erfinder den Einsatz von strahlungsbasierten bzw. optischen Sortierverfahren, beispielsweise auf der Grundlage von Infrarot für besonders leistungsfähig, wobei insbesondere solche Techniken, welche auf nahes Infrarot (NIR) setzen, nach Einschätzung der Erfinder besonders geeignet sind, um im gereinigten Kunststoffmaterial Partikel mit einer ungewünschten Farbe und/oder chemischen Zusammensetzung zu identifizieren. Entsprechende identifizierte Partikel können mit geeigneten Methoden ausgesondert werden, beispielsweise durch einen Arbeitsroboter oder mittels einer Luftpistole.

Das in Verfahrensschritt c) erhaltene gereinigte Kunststoffmaterial wird anschließend in Verfahrensschritt d) extrudiert und granuliert, wodurch das angestrebte Kunststoffrecyclat in einer vorteilhaft zu handhabenden Form erhalten wird. Das Konzept der Extrusion von Kunststoffen ist dem Fachmann umfassend vertraut. Hierfür geeignete Vorrichtungen, sogenannte Extruder, sind von verschiedenen Herstellern kommerziell erhältlich. Den Erfindern ist es insoweit gelungen, besonders geeignete Extrusionstemperaturen zu identifizieren, mit denen sich im erfindungsgemäßen Verfahren besonders vorteilhafte Ergebnisse erzielen lassen, insbesondere wenn diese mit einer zusätzlichen Aufreinigung des verflüssigten Kunststoffmaterials im Extruder kombiniert werden, wie es nachfolgend offenbart ist. Bevorzugt ist ein erfindungsgemäßes Verfahren, wobei das Extrudieren bei einer Temperatur im Bereich von 230 bis 300 °C, bevorzugt im Bereich von 240 bis 280 °C, erfolgt.

Nach Einschätzung der Erfinder ist es ganz besonders bevorzugt, wenn das Kunststoffmaterial nicht nur einfach so durch den Extruder zum Granulieren gefördert wird, sondern wenn die Verflüssigung des Kunststoffmaterials zudem in synergistischer Weise ausgenutzt wird, um durch einen im Extruder verbauten Filter eine zusätzliche Reinigungswirkung zu erzeugen. Hierfür können insbesondere engmaschige Siebe eingesetzt werden, bevorzugt mit einem Porendurchmesser im Bereich von 75 bis 200 µm, bevorzugt im Bereich von 100 bis 150 µm. Durch entsprechende engmaschige Siebe kann der plastifizierte Kunststoff gedrückt werden, um Störstoffe zurückzuhalten. Bevorzugt ist ein erfindungsgemäßes Verfahren, wobei das verflüssigte Kunststoffmaterial im Extruder vor dem Granulieren gefiltert wird, bevorzugt durch einen Laserfilter.

Zudem können im Extruder vorteilhafterweise Vakuumstufen vorgesehen werden, die durch die Entfernung von flüchtigen Substanzen zu einer weiteren Reduktion des Geruchs beitragen. Bevorzugt ist ein erfindungsgemäßes Verfahren, wobei der Extruder zum Extrudieren und Granulieren des gereinigten Kunststoffmaterials eine oder mehrere, bevorzugt zwei oder mehr, Vakuumstufen umfasst.

Die Erfinder haben erkannt, dass im Rahmen des erfindungsgemäßen Verfahrens mit einer Unterwasser-Granulierung die besten Ergebnisse erzielt werden können. In einer besonders vorteilhaften Ausgestaltung erfolgt diese Unterwasser-Granulierung dabei nicht unter normalem Wasser, sondern wiederum unter dem bereits vorstehend offenbarten Osmosewasser. Hierdurch ergeben sich für das Granulierungsverfahren besonders vorteilhafte Eigenschaften und das gewünschte Granulat des Kunststoffrecyclats wird in einer besonders hohen Reinheit erhalten. Bevorzugt ist ein erfindungsgemäßes Verfahren, wobei das Granulieren des gereinigten Kunststoffmaterials durch Unterwasser-Granulierung erfolgt, bevorzugt unter Osmosewasser.

Es kann als Vorteil des erfindungsgemäßen Verfahrens gesehen werden, dass dieses in effizienter Weise automatisiert werden kann und dadurch eine aus ökonomischer Sicht besonders wünschenswerte, weitgehend kontinuierliche Verfahrensführung ermöglicht wird. Bevorzugt ist entsprechend ein erfindungsgemäßes Verfahren, wobei das Verfahren ein kontinuierliches oder halbkontinuierliches Verfahren ist. Bevorzugt ist zusätzlich oder alternativ ein erfindungsgemäßes Verfahren, wobei das Verfahren durch eine elektronische Datenverarbeitungsvorrichtung gesteuert wird.

Die Erfinder schlagen vor, dass die Förderung des Kunststoffmaterials zwischen den einzelnen Arbeitsstationen des erfindungsgemäßen Verfahrens insbesondere vor dem Hintergrund einer guten Steuerbarkeit und einer ökonomischen sowie ökologischen Prozessführung in vorteilhafter Weise durch Förderschnecken erfolgen kann, zumindest insoweit das Material feucht ist. Für das im Rahmen des erfindungsgemäßen Verfahrens hergestellte partikuläre Kunststoffmaterial, insbesondere in der Form von Flakes, ist es hingegen besonders bevorzugt, diese mittels Vakuumförderung zu transportieren. Der Einsatz von Schneckentechnik ermöglicht die Einsparung von Zentrifugen, die ansonsten die Materialien zwischen den jeweiligen Aggregaten abtrocknen müssten. Die Schneckentechnologie reduziert darüber hinaus die Feinkorn- bzw. Kleinstpartikelentstehung im Mahlgut durch Feinabrieb sowie die Verschleppung von Verunreinigungen zwischen den verschiedenen Aggregaten. Bevorzugt ist ein erfindungsgemäßes Verfahren, wobei die Förderung des Zielkunststoffs zwischen den Arbeitsstationen des Verfahrens bezogen auf die Förderstrecke zumindest teilweise, bevorzugt überwiegend, besonders bevorzugt im Wesentlichen vollständig, mit Förderschnecken, Druckförderern oder Vakuumförderung, bevorzugt mit Förderschnecken, erfolgt.

Es kann als Vorteil des erfindungsgemäßen Verfahrens gesehen werden, dass eine effiziente Integration einer Wasseraufbereitung möglich ist. In synergistischer Weise ist es hierbei sogar denkbar, dass bestimmte Abwasserfraktionen mittels der in bevorzugt vorhandenen Umkehrosmoseanlage besonders rein aufgearbeitet werden können. Nach Einschätzung der Erfinder ist es jedoch mit Blick auf die Reinheit des Osmosewassers sowie auf die Wartungsanfälligkeit der Umkehrosmoseanlage bevorzugt, das erzeugte Abwasser der Wasseraufbereitung nicht für die Herstellung des Osmosewassers zu verwenden, sonders dieses beispielsweise in einer etwaigen Nassschneidmühle, in einem ggf. vorhandenen Friktionswäscher und/oder Vorwäscher vor dem Intensivwäscher oder erst im Intensivwäsche oder in die Dichtetrennung wieder zuzuführen, und entsprechend für die Herstellung des Osmosewassers auf Frischwasser zu setzen. Bevorzugt ist ein erfindungsgemäßes Verfahren, wobei das in Verfahrensschritt b) und c) erzeugte Abwasser mit einer Wasseraufbereitungsanlage, bevorzugt mit einer Wasseraufbereitungsanlage, aufbereitet wird, wobei das aufbereitete Abwasser bevorzugt mit einem Recyclisierungsanteil von 80 % oder mehr, bevorzugt 85 % oder mehr, besonders bevorzugt 90 % oder mehr, in die Verfahrensschritte b) und c) zurückgeführt wird.

Im Lichte der vorstehenden Offenbarung versteht der Fachmann, dass im Zusammenhang mit der Erfindung auch ein Kunststoffrecyclat offenbart wird, welches mit dem erfindungsgemäßen Verfahren hergestellt oder herstellbar ist.

Darüber hinaus betrifft die Erfindung auch eine Aufreinigungsanlage für den Einsatz in dem erfindungsgemäßen Verfahren, umfassend:
i) ein Zerkleinerungsaggregat zum Zerkleinern der Ausgangszusammensetzung,
ii) einen Intensivwäscher zum Reinigen des partikulären Kunststoffmaterials bei einer Temperatur von 60 °C oder mehr,
iii) eine Umkehrosmoseanlage zur Herstellung von Osmosewasser, und
iv) einen Extruder zum Extrudieren und Granulieren des gereinigten Kunststoffmaterials.

Bevorzugte Ausführungsformen der erfindungsgemäßen Aufreinigungsanlagen ergeben sich dabei aus bevorzugten erfindungsgemäßen Verfahren, für deren Ausführung die bevorzugten erfindungsgemäßen Aufreinigungsanlagen ausgelegt sind.

Bevorzugt ist insoweit insbesondere eine erfindungsgemäße Aufreinigungsanlage, wobei die Aufreinigungsanlage zusätzlich umfasst:
v) einen Vorzerkleinerer, und/oder
vi) eine Siebanlage, und/oder
vii) einen oder mehrere Magnetabscheider, und/oder
viii) einen oder mehrere Nichteisen-Metallabscheider und/oder
ix) eine Sortieranlage zur sensorgestützte Sortierung, wobei die Sortieranlage bevorzugt ein oder mehrere optische Sensoren, besonders bevorzugt NIR-Sensoren, umfasst.

Bevorzugt ist zusätzlich oder alternativ auch eine erfindungsgemäße Aufreinigungsanlage, wobei das Zerkleinerungsaggregat eine Nassschneidemühle ist.

Bevorzugt ist zusätzlich oder alternativ zudem eine erfindungsgemäße Aufreinigungsanlage, zusätzlich umfassend:
x) einen Friktionswäscher, wobei der Friktionswäscher bevorzugt zwischen dem Zerkleinerungsaggregat und dem Intensivwäscher angeordnet ist, und/oder
xi) einen Vorwäscher, bevorzugt für das Vorreinigen vor dem Intensivwäscher, und/oder
xii) eine Trennstufe zur Trennung von schwimm- und sinkfähigen Kunststoffen, bevorzugt umfassend eine Entwässerungsschneck.

Bevorzugt ist zusätzlich oder alternativ ebenfalls eine erfindungsgemäße Aufreinigungsanlage, zusätzlich umfassend:
xiii) einen Trocknungsanlage, umfassend Mittel zur mechanischen und/oder thermischen Trocknung.

Bevorzugt ist zusätzlich oder alternativ darüber hinaus eine erfindungsgemäße Aufreinigungsanlage, zusätzlich umfassend:
xiv) einen der Trocknungsanlage nachgelagerten Windsichter und/oder Siebanlage.

Bevorzugt ist zusätzlich oder alternativ zudem eine erfindungsgemäße Aufreinigungsanlage, zusätzlich umfassend:
xv) einen elektronische Datenverarbeitungsvorrichtung zur Steuerung der Anlage.

Bevorzugt ist zusätzlich oder alternativ ebenfalls eine erfindungsgemäße Aufreinigungsanlage, zusätzlich umfassend:
xvi) eine Vielzahl von zwischen den Bestandteilen der Aufreinigungsanlage angeordneten Förderschnecken.

Nachfolgend werden die Erfindung und bevorzugte Ausführungsformen der Erfindung unter Bezugnahme auf die beiliegenden Figuren näher erläutert und beschrieben. In den Figuren zeigen dabei:
- Fig. 1: eine schematische Darstellung von Teilverfahrensschritten des Verfahrensschritts a) des erfindungsgemäßen Verfahrens in einer bevorzugten Ausführungsform;
- Fig. 2: eine schematische Darstellung von Teilverfahrensschritten der Verfahrensschritte b) und c) des erfindungsgemäßen Verfahrens in einer bevorzugten Ausführungsform; und
- Fig. 3: eine schematische Darstellung von Teilverfahrensschritten des Verfahrensschritts d) des erfindungsgemäßen Verfahrens in einer bevorzugten Ausführungsform

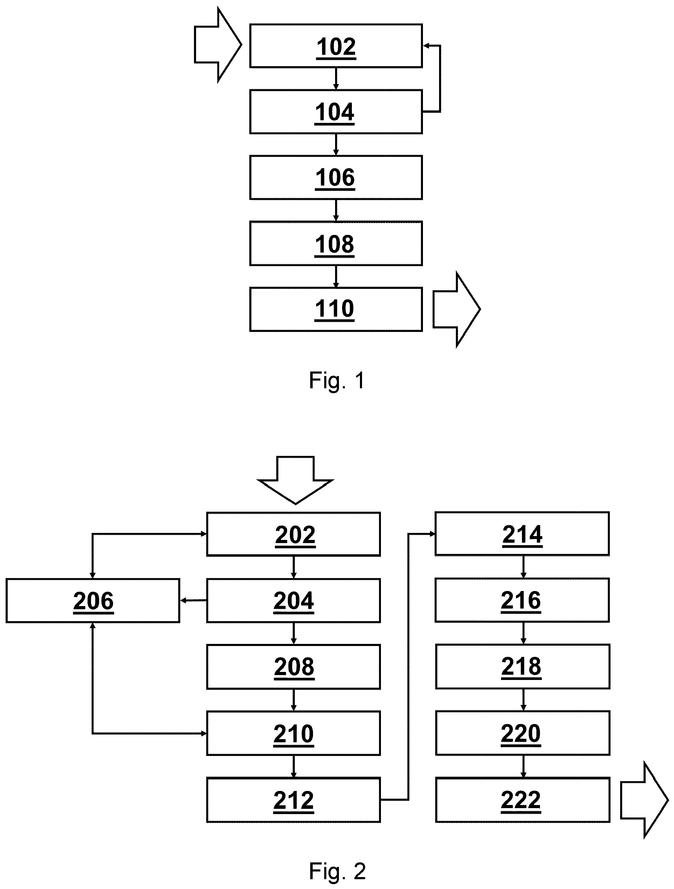

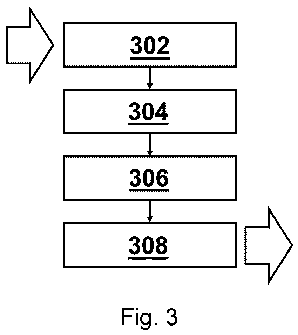

Die Fig. 1, 2 und 3 zeigen zusammen, jeweils in einer schematischen Darstellung als Flussdiagramm, ein besonders bevorzugtes erfindungsgemäßes Verfahren zur Herstellung eines Kunststoffrecyclats unter Einsatz einer erfindungsgemäßen Ausreinigungsanlage. Hierbei ist der Verfahrensschritt a) in Fig. 1, die Verfahrensschritte b) und c) in Fig 2 sowie Verfahrensschritt d) in Fig. 3 gezeigt, wobei die Verfahrensschritte jeweils in Teilverfahrensschritte der bevorzugten Verfahrensführung aufgeteilt sind, wobei die Richtung des Verfahrens durch die eingezeichneten Pfeile angedeutet wird.

In Fig. 1 ist gezeigt, wie eine Vorläuferzusammensetzung, welche beispielsweise Ballenware aus HDPE aus der haushaltsnahen Sammlung bzw. Entsorgung bestehen kann, in eine Ausgangszusammensetzung überführt wird. Die Ballenware wird in Teilschritt 102 in einen Vorzerkleinerer gegeben, dem eine Siebung mit einem Flachsieb in Teilschritt 104 nachgelagert ist, bei der die Größenfraktion im Bereich von 30 bis 320 mm isoliert wird. Anschließend wird das Kunststoffmaterial in Teilschritt 106 von metallischen Bestandteilen gereinigt, wobei hierfür ein Überbandmagnet und ein Trommelmagnet kombiniert werden, um magnetische Bestandteile abzuscheiden, bevor die Zusammensetzung in einen Nichteisenscheider überführt wird. Anschließend erfolgt in Teilschritt 108 eine optische Analyse des Materials mittels NIR/VIS-Methodik, um eine Sortierung nach den Farbeigenschaften des Materials vorzunehmen und Fremdkunststoffe auszusondern. In dem beispielhaften Prozess der Fig. 1 wird eine Ausgangszusammensetzung hergestellt, welche im gezeigten Beispiel eine Farb-und Materialreinheit für HDPE von größer 94 % aufweist. In Teilschritt 110 wird das so erhaltene Material aus Handhabungsgründen für die der weiteren Verarbeitung vorgelagerte Lagerung mit einer Ballenpresse zu einem Ballen gepresst.

In Fig. 2 wird die gemäß Fig. 1 erhaltene Ausgangszusammensetzung, gegebenenfalls in Kombination mit sonstiger vorsortierter HDPE-Ballenware, in Teilschritt 202 in eine Nassschneidmühle gegeben, um ein partikuläres Kunststoffmaterial zu erhalten. Dieses partikuläre Kunststoffmaterial wird anschließend in Teilschritt 204 in einen schrägen Friktionswäscher eingegeben.

Anschließend werden etwaige verbliebene Schwerteile in Teilschritt 208 in einer Schwergutfalle abgesondert, welche auch als Pufferbehälter dient. Im Anschluss daran kommt es in Teilschritt 210 zu einer Vorwäsche, wobei die Abwässer aus der Vorwäsche in Teilschritt 210 sowie dem Friktionswäscher und der Nassscheidemühle jeweils der Prozesswasseraufbereitung 206 zugeführt werden können, von wo aus das aufbereitete Wasser beispielsweise in die Nassschneidmühle bzw. den Vorwäscher zurückgegeben werden kann.

An den Vorwäscher in Teilschritt 210 schließt sich als Teilschritt 212 der Intensivwäscher an, indem das partikuläre Kunststoffmaterial bei einer Temperatur von etwa 80 °C und einer Verweilzeit im Bereich von 1 bis 10 Minuten gereinigt wird.

Das aus dem Intensivwäscher erhaltene gereinigte partikuläre Kunststoffmaterial wird anschließend einer Dichtetrennung unterzogen, wobei im entsprechenden Teilschritt 214 die Schwimmfraktion ausgewählt, um beispielsweise verbliebene Nicht-Zielkunststoffe, wie beispielsweise Polystyrol (PS), welche sich in der Sinkfraktion ansammeln, abzutrennen, und anschließend in einem Nachwäscher in Teilschritt 216 nachgereinigt wird. Im Rahmen der Nachwäscher in Teilschritt 216 wird mit Osmosewasser gespült, welches in einer Umkehrosmoseanlage während der Verfahrensführung kontinuierlich produziert wird.

Anschließend erfolgt in Teilschritt 218 die Trocknung der so erhaltenen Flakes, wobei hierfür eine mechanische Trocknung von einer thermischen Trocknung gefolgt wird. Das so getrocknete Material wird in Teilschritt 220 einer weiteren Auftrennung mittels eines Windsichters und eines Feinsiebes unterzogen, um Leichtgut und Feinkorn mit einem Durchmesser von weniger als 2 mm zu entfernen. In Teilschritt 222 erfolgt eine erneute Aussortierung von farblich und/oder stofflich nicht gewünschten Bestandteilen, wobei dies wiederum mittels spektroskopischer Verfahren, insbesondere NIR, erfolgt.

Das entsprechende Material, welches am Ende der Teilschritte gemäß Fig. 2 erhalten wird, kann anschließend der Extrusion und Granulierung zugeführt werden. Der entsprechende Verfahrensschritt d) ist in Fig. 3 visualisiert. In Teilschritt 302 wird das zuvor gereinigte Kunststoffmaterial in einem Smart-Feeder konditioniert, anschließend in einem Extruder aufgeschmolzen (Plastifikationsextruder) und durch einen Laserfilter gefiltert, um weitere Verunreinigungen als Produktionsausschuss entfernen zu können. Anschließend wird das derart gefilterte Material in einem Vakuumextruder weiterverarbeitet, was durch Teilschritt 304 angedeutet wird. Im Anschluss an diesen Vakuumextruder erfolgt in Teilschritt 306 die Granulierung, wobei diese besonders bevorzugt unter Osmosewasser erfolgt. Eine Extrusion kann dabei auch in einem Einschneckenextruder oder ähnlicher Granuliertechnik direkt ohne Vorkonditionierung erfolgen, wobei der Laserfilter dann vorzugsweise vor die Granulierung geschaltet ist. Das so erhaltene HDPE-Kunststoffrecyclat wird in Teilschritt 308 verpackt und kann am Ende des gesamten Verfahrens als leistungsfähiger Werkstoff in Verkehr gebracht werden, der insbesondere für die Herstellung von Verpackungsmaterialien bzw. Endverpackungen, insbesondere im Bereich der Beauty-Care bzw. Kosmetik und der Reinigungsmittel, besonders geeignet ist, wobei in zeit- und kosteneffizienter Weise insbesondere eine Reinheit von mehr als 99,6 % erreicht wird, sowohl hinsichtlich der (wert-)stofflichen als auch der farblichen Reinheit.

## Patentansprüche

1. Verfahren zur Herstellung eines Kunststoffrecyclats, umfassend die Verfahrensschritte:
a) Herstellen oder Bereitstellen einer Ausgangszusammensetzung umfassend einen Zielkunststoff in einem Massenanteil von 90 % oder mehr, bezogen auf die Masse der Ausgangszusammensetzung, wobei der Zielkunststoff ausgewählt ist aus der Gruppe bestehend aus Polyethylen, Polypropylen und Polystyrol,
b) Zerkleinern der Ausgangszusammensetzung in einem Zerkleinerungsaggregat zum Erhalt eines partikulären Kunststoffmaterials,
c) Reinigen des partikulären Kunststoffmaterials zum Erhalt eines gereinigten Kunststoffmaterials,
wobei das Reinigen das Waschen in einem Intensivwäscher umfasst, wobei das Waschen im Intensivwäscher bei einer Temperatur von 60 °C oder mehr erfolgt,
wobei das Reinigen nach dem Intensivwäscher das Spülen mit Osmosewasser umfasst, wobei das Osmosewasser hergestellt wird durch Aufreinigung in einer Umkehrosmoseanlage, und
d) Extrudieren und Granulieren des gereinigten Kunststoffmaterials zum Erhalt eines Kunststoffrecyclats, umfassend den Zielkunststoff.

2. Verfahren nach Anspruch 1, wobei der Zielkunststoff ausgewählt ist aus der Gruppe bestehend aus Polyethylen.

3. Verfahren nach einem der Ansprüche 1 oder 2, wobei die Ausgangszusammensetzung bezogen auf die Masse der Ausgangszusammensetzung zu einem Massenanteil von 95 % oder mehr aus recyceltem Kunststoffmaterial besteht.

4. Verfahren nach einem der Ansprüche 1 bis 3, wobei das partikuläre Kunststoffmaterial den Zielkunststoff in der Form von Flakes umfasst.

5. Verfahren nach einem der Ansprüche 1 bis 4, wobei das Waschen in dem Intensivwäscher bei einer Temperatur von 65 °C oder mehr erfolgt.

6. Verfahren nach einem der Ansprüche 1 bis 5, wobei das partikuläre Kunststoffmaterial im Intensivwäscher in Schwerkraftrichtung einen Gradienten der Schüttdichte ausbildet.

7. Verfahren nach einem der Ansprüche 1 bis 6, wobei das Reinigen vor dem Intensivwäscher ein Reinigen in einem Friktionswäscher umfasst.

8. Verfahren nach einem der Ansprüche 1 bis 7, wobei das Osmosewasser unmittelbar vor und/oder während Verfahrensschritt c) hergestellt wird.

9. Verfahren nach einem der Ansprüche 1 bis 8, wobei das Granulieren des gereinigten Kunststoffmaterials durch Unterwasser-Granulierung erfolgt, bevorzugt unter Osmosewasser.

10. Aufreinigungsanlage für den Einsatz in dem Verfahren nach einem der Ansprüche 1 bis 9, umfassend:
i) ein Zerkleinerungsaggregat zum Zerkleinern der Ausgangszusammensetzung,
ii) einen Intensivwäscher zum Reinigen des partikulären Kunststoffmaterials bei einer Temperatur von 60 °C oder mehr,
iii) eine Umkehrosmoseanlage zur Herstellung von Osmosewasser, und
iv) einen Extruder zum Extrudieren und Granulieren des gereinigten Kunststoffmaterials.
